# EUROPEAN PATENT APPLICATION

(11) **EP 2 448 208 A1**
(43) Date of publication of application: **02.05.2012**
(21) Application number: 10306193.3
(22) Date of filing: 29.10.2010
(51) Int. Cl.: H04L 29/06

(54) **Handover data exchange with an IEEE 802.21 network entity**

(71) Applicant: Alcatel Lucent, 75007 Paris (FR)
(72) Inventor: Mongazon-Cazavet, Bruno, 91240, St Michel-sur-Orge (FR); El Mghazli, Yacine, 94110, Arcueil (FR)
(74) Representative: ALU Antw Patent Attorneys

(57) **Abstract**

The present invention relates to a communication system (1) .

In accordance with an embodiment of the invention, the communication system comprises:
- a roaming mobile node (UE) configured to select a particular access network (21, 31) based on handover data exchanged with a handover service node (MIIS, PoS1, PoS2), and to attach to the particular access network, thereby yielding a particular network location,
- a home agent (HA) configured to provide mobility support to the mobile node, and further configured to keep track of the particular network location for the mobile node, and to tunnel traffic bound to a home network address (HoA) held by the mobile node in a home subnet (11) towards the particular network location,

wherein the mobile node is further configured to encode, respectively decode, the handover data into, respectively from, mobility messages exchanged with the home agent and/or with a foreign agent (FA1, FA2) that provides local mobility support to the mobile node at the particular network location.

The present invention also relates to a mobile node, and to a method for managing mobility of a roaming mobile node.

## Description

### Technical Field of the Invention

The present invention relates to Internet Protocol (IP) mobility for roaming mobile nodes, such as wireless or mobile user devices.

### Technical Background of the Invention

The Request For Comments (RFC) 3344 entitled "IP Mobility Support for IPv4", released in August 2002 by the Internet Engineering Task Force (IETF), and further shortened as Mobile IP or MIP, specifies protocol enhancements that allow transparent routing of IP datagrams to roaming mobile nodes.

Each mobile node is bound to a home IP address in a home subnet, regardless of its current point of attachment to the Internet. While roaming away from home, a mobile node is further bound to a care-of IP address in a visited subnet, which provides information about its current point of attachment to the Internet. The protocol provides for registering and de-registering the care-of address with a home agent.

Upon registration, the home agent binds the registered care-of address to the home address of the mobile node, and forwards IP datagrams bound to that home address through a tunnel to the care-of address. After arriving at the end of the tunnel, each datagram is then delivered to the mobile node. This method preserves communication continuity for the on-going sessions while roaming away from home.

The care-of address may be an address obtained by the mobile node in the visited subnet by means of e.g. Dynamic Host Configuration Protocol (DHCP) or Point-to-Point Protocol (PPP), and assigned to one of its network interface, such as a 802.11 wireless interface. Alternatively, the care-of address may be an address held by a foreign agent in the visited subnet, which agent delivering the tunneled datagrams to the mobile node via e.g. Layer 2 (L2) forwarding. The second method is preferred as it does not place unnecessary demands on the already limited IPv4 address space, yet the mobile node and the foreign agent shall bypass their normal IP routing mechanism when sending datagrams to each other.

In the reverse direction of communication, the outgoing datagrams may be tunneled back to the home agent, or may be delivered via a default route to the foreign agent for standard IP routing towards the final destination.

While Mobile IP infrastructures provide efficient and standard way to deliver handover execution with session continuity, they lack of integrated and standard mechanisms for interface selection and handover control. In practice, the choice of the interface to handoff is often left to local terminal policies implemented into dedicated and proprietary software components (a.k.a. connection managers). In addition, Mobile IP infrastructures lack of network-initiated handover capabilities.

The standard entitled "Media Independent handover Services", published in January 2009 by the the Institute of Electrical and Electronics Engineers (IEEE), ref. IEEE 802.21, defines media access-independent mechanisms that optimize handovers between heterogeneous IEEE 802 systems and between IEEE 802 systems and cellular systems.

IEEE 802.21 provides the missing, technology-independent, abstraction layer able to offer a common interface to upper layers, thus hiding technology-specific primitives. This abstraction can be exploited by the IP stack, or any other upper layer such as a mobility management protocol, to better interact with the underlying technologies, ultimately leading to improved handover performance. This abstraction layer is named the Mobile Independent Handover (MIH) layer, and allows interface and access network selection based on handover data exchanged with further network entities.

The following network entities are defined in IEEE 802.21:
- Point of Service (PoS): This is a network entity that exchanges MIH messages with a mobile node. Note that a mobile node may have different PoSs as it may exchange messages with more than one network entity.
- non-PoS: This is a network entity that does not exchange MIH messages with a mobile node. Note that a given network node may be a PoS for a mobile node with which it exchanges MIH messages and a non-PoS for a network node for which it does not.
- MIH point of attachment (PoA): This is the endpoint of a L2 link with the mobile node at the other endpoint.

In order to make communication between these network entities possible, the reference model specifies several communication reference points:
- Communication reference point R1 (MN <-> Serving PoA (PoS)):
   This communication reference point is used by the mobile node to communicate with its PoA. Among other purposes, it may be used by the mobile node to gather information about the current status of its connection.
- Communication reference point R2 (MN <-> Candidate PoA (PoS)):
   This communication reference point is used by the mobile node to communicate with a candidate PoA. It may be used to gather information about candidate PoAs before making a handover decision.
- Communication reference point R3 (MN <-> non-PoA (PoS)): This communication reference point is used by the mobile node to communicate with a PoS located on a non-PoA network entity. It may be used by a network node to inform the mobile node about the different IP configuration methods in the network.
- Communication reference point R4 (PoS <-> non-PoS): This communication reference point is used for communications between a PoS and a non-PoS. This reference point is typically used when a PoS that is serving a mobile node needs to ask for information from another MIH server (the non-PoS).
- Communication reference point R5 (PoS <-> PoS): This communication reference point is used between two different PoSs located at different network entities.

IEEE 802.21 defines three different types of communications with different associated semantics, the so-called MIH services:
- Event services: Events related to handovers can be originated at the Medium Access Control (MAC) or MIH layer located in the mobile node or the PoA. As several entities could be interested in the generated events, 802.21 specifies a subscription delivery mechanism. All entities interested in an event type should register to it; when the event is generated it will be delivered to the subscription list. MIH remote events may be delivered using the R1 (MN <-> Serving PoA (PoS)), R2 (MN <-> Candidate PoA (PoS)) and R3 (MN <-> non-PoA (Pos)) communication reference points. Events encompasses link state changes (up, down, going down, etc), link parameter changes (e.g., when a specific threshold is reached), etc.
- command services: commands are sent from the higher layers to the lower layers in order to determine the status of links or control and configure the terminal to gain optimal performance or facilitate optimal handover policies. The receipt of a certain command request may cause event generation, and in this way the consequences of a command could be followed by the network and related entities. Commands can be delivered locally or remotely. Through remote commands the network may force a terminal to hand over, allowing the use of network initiated handovers and network assisted handovers.
- Information services: Information service provides a framework through which a mobile node or a network node is able to acquire network information within a geographical area to facilitate handovers. The objective is to gain knowledge about all heterogeneous networks in the neighborhood of the mobile node to facilitate handovers when roaming across these networks.

Mobile IP infrastructures that want to take benefits of IEEE 802.21 function generally face a common integration problem. Both Mobile IP and 802.21 provide their own signaling and require each a network path to flow upon. 802.21 might operate directly at L2 (unlikely to occur) or at L3. Mobile IP operates mainly at L3. A particular problem exists when 802.21 operates at L3 together with Mobile IP. In such a case, 802.21 requires L3 connectivity to transmit and receive signaling packets. The connectivity might be local using the care-of address, or global using the home address. Local connectivity puts the burden on the 802.21 infrastructure to be put in place and appears to be not realistic. Global connectivity is simpler for 802.21 deployment, however the pipe is rather inefficient. In addition, should this transport be temporarily unavailable or congested, it would affect the handover behavior as a whole. Current solutions assume global connectivity is always available, or implement complex and proprietary heuristics in 802.21 to recover from a temporary home address unavailability. 802.21 solutions that use local connectivity are not currently deployed.

### Summary of the Invention

It is an object of the present invention to further improve operation and integration of IEEE 802.21 protocol.

In accordance with a first aspect of the invention, a communication system comprises:
- a roaming mobile node configured to select a particular access network based on handover data exchanged with a handover service node, and to attach to the particular access network, thereby yielding a particular network location for the mobile node,
- a home agent configured to provide mobility support to the mobile node, and further configured to keep track of the particular network location for the mobile node, and to tunnel traffic bound to a home network address held by the mobile node in a home subnet towards the particular network location, wherein the mobile node is further configured to encode, respectively decode, the handover data into, respectively from, mobility messages exchanged with the home agent and/or with a foreign agent that provides local mobility support to the mobile node at the particular network location.

In accordance with another aspect of the invention, a mobile node is configured to select a particular access network based on handover data exchanged with a handover service node, and to attach to the particular access network, thereby yielding a particular network location for the mobile node, wherein the mobile node is further configured to encode, respectively decode, the handover data into, respectively from, mobility messages exchanged with a home agent that provides mobility support to the mobile node by keeping track of the particular network location for the mobile node and by tunneling traffic bound to a home network address held by the mobile node in a home subnet towards the particular network location, and/or with a foreign agent that provides local mobility support to the mobile node at the particular network location.

In accordance with still another aspect of the invention, a method for managing mobility of a roaming mobile node comprises the steps of:
- by the mobile node, selecting a particular access network based on handover data exchanged with a handover service node, and attaching to the particular access network, thereby yielding a particular network location for the mobile node,
- by a home agent configured to provide mobility support to the mobile node, keeping track of the particular network location for the mobile node, and tunneling traffic bound to a home network address held by the mobile node in a home subnet towards the particular network location,
wherein the method further comprises the steps of, by the mobile node, encoding, respectively decoding, the handover data into, respectively from, mobility messages exchanged with the home agent and/or with a foreign agent that provides local mobility support to the mobile node at the particular network location.

The basic idea of the solution is to use Mobile IP signaling (care-of address connectivity) to carry IEEE 802.21 signaling. Doing so provides a simple and efficient signaling path for IEEE 802.21.

The new solution is efficient, simple and standard. In addition, it brings IEEE 802.21 capabilities to Mobile IP in such a way that it would allow the preliminary steps of handover execution (interface selection and handover decision) to be performed with the features brought by IEEE 802.21.

In one embodiment of the invention, the handover r data comprises handover event service data whereby handover events are notified

In one embodiment of the invention, the handover data comprises handover command service data whereby handover commands are carried out.

In one embodiment of the invention, the handover data comprises handover information service data whereby knowledge about neighboring access networks are gained

correspondingly, the handover service node refers to an IEEE 802.21 PoS or information server depending on the particular type of handover data that is exchanged.

In one embodiment of the invention, the mobility messages are generic notification messages exchanged with the home or foreign agent.

IEEE 802.21 signaling can be carried into Mobile IP generic notification messages. Generic notification messages is a Mobile IP extension currently drafted at the IETF, expected to become soon a standard track document. This Mobile IP extension allows bi-directional generic messages to flow in a reliable and authenticated manner between the mobile node and the home or foreign agent.

In one embodiment of the invention, mobility messages are registration messages exchanged with the home or foreign agent.

Alternatively, IEEE 802,21 signaling can be piggybacked to Mobile IP signaling messages that are to be transmitted anyhow, such as registration messages exchanged with the home or foreign agent whenever the mobile node roams away from or back to home.

In one embodiment of the invention, the home agent and the handover service node form part of a single network node.

For instance, an IEEE 802.21 PoS and/or information server can be integrated together with a Mobile IP home agent into a single network unit, thereby improving signaling latency and efficiency.

In one embodiment of the invention, the foreign agent and the handover service node form part of a single network node.

For instance, an IEEE 802.21 PoS can be integrated together with a Mobile IP foreign agent into a single network unit.

Thus, the present invention allows to smoothly integrate IEEE 802.21 components with Mobile IP components, thereby keeping handover-related components consistent and close to each other.

### Brief Description of the Drawings

The above and other objects and features of the invention will become more apparent and the invention itself will be best understood by referring to the following description of an embodiment taken in conjunction with the accompanying drawings wherein:
- fig. 1 represents a first embodiment of a wireless communication system with both mobility and handover support,
- fig. 2A represents a prior art protocol stack used for exchanging MIH messages,
- fig. 2B represents a new protocol stack used for exchanging MIH messages,
- fig. 3 is a message flow chart between a mobile node and MIP/MIH network entities for the first embodiment,
- fig. 4 is the continuation of the message flow chart in fig. 3,
- fig. 5 is a second embodiment of a wireless communication system with both mobility and handover support,
- fig. 6 is a message flow chart between a mobile node and MIP/MIH network entities for the second embodiment, and
- fig. 7 is the continuation of the message flow chart in fig. 6.

### Detailed Description of the Invention

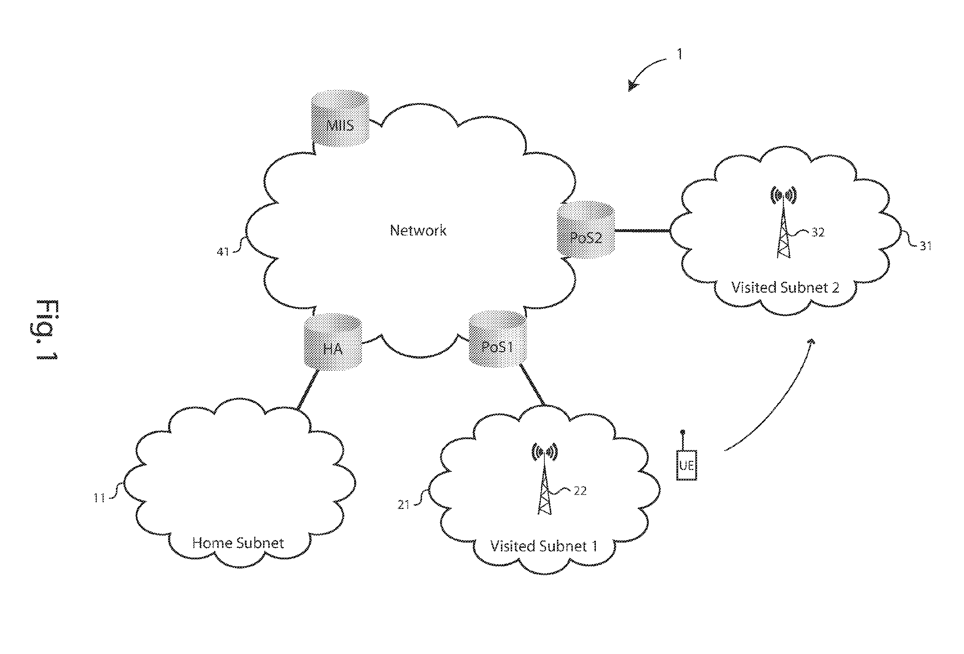

There is seen in fig. 1 a first IP-based communication system 1 comprising the following network domains:
- a home subnet 11,
- a first visited subnet 21,
- a second visited subnet 31, and
- a network 41.

The subnets 11, 21 and 31 comprise network facilities, such as hubs, switches, routers, gateways, etc.

The subnets 21 and 31 further include at least one radio access node 22 and 32 respectively for wirelessly connecting to roaming mobile nodes, if any. The radio access nodes 22 and 32 operate according to any wireless or cellular radio access technology, and can be e.g. an IEEE 802.11a/b/g Wifi Base Station (BS), an IEEE 802.16 Wimax BS, a Global System for Mobility (GSM) Base Transceiver Station (BTS), a Code Division Multiple Access (CDMA) BTS, a Universal Mobile Terrestrial System (UMTS) Node B, or a Long-Term Evolution (LTE) evolved-Node B (eNB).

The network 41 hosts the following network entities:
- a MIP Home Agent HA for providing mobility support to mobile nodes homed in the subnet 11,
- a MIH information server MIIS for providing MIH information services to mobile nodes,
- a MIH PoS PoS1 for handover support in the visited subnet 21,
   and
- a MIH PoS PoS2 for handover support in the visited subnet 31.

The Home Agent HA is typically located at the edge of the network 41 and forms part of e.g. an edge router within an Internet Service Provider (ISP) network. The PoSs PoS1 and PoS2 can be located at the edge of the network 41, or in the respective subnets 21 and 31 as part of e.g. the PoAs 22 and 32.

Alternatively, a single PoS may provide support for both the visited subnets 21 and 31. Still alternatively, The operation of the server MIIS may be proxied by the home agent HA so as to reduce the latency of MIH transactions between mobile nodes and the server MIIS.

A mobile node UE is shown as roaming away from home. The mobile node UE is assigned co-located care-of addresses when visiting foreign subnets by means of e.g. DHCP or PPP.

The home agent HA binds a home IP address HoA held by the mobile node UE in the home subnet 11 to a care-of IP address temporarily assigned to the mobile node UE in a visited subnet. User traffic bound to the home address HoA is then tunneled by the home agent HA towards the care-of address by means of minimal encapsulation method (RFC 2004) or Generic Routing Encapsulation method (GRE, RFC 1706).

Address bindings are set-up and cleared upon receipt of MIP REGISTRATION REQUEST messages from the mobile node UE. The mobile node UE sends REGISTRATION REQUEST messages according to its current point of attachment to the network. Presently, when attaching to the subnet 21, the mobile node UE sends a REGISTRATION REQUEST message to the home agent HA for binding a first care-of address CoA1 to its home address HoA. The home agent HA acknowledges or rejects the proposed binding by sending back a REGISTRATION REPLY message to the mobile node UE. Further, when switching to the subnet 31, the mobile node UE sends another REGISTRATION REQUEST message to the home agent HA for binding another second care-of address CoA2 to its home address HoA while releasing the previous CoA1-HoA binding.

Additionally, the mobile node UE accommodates a mobility management application for selecting the most suitable radio access network while roaming away from home. The mobility management application relies on MIH command, event and information services supplied by a MIH layer of the mobile node UE, and cooperates with further MIH network entities for handover preparation and execution. Presently, when switching from the serving subnet 21 to the target subnet 31, the mobile node UE exchanges MIH messages with the server MIIS, with the serving PoS PoS1 and with the target PoS PoS2. The radio access nodes 22 and 32 respectively act as the serving and target PoAs for the mobile node UE.

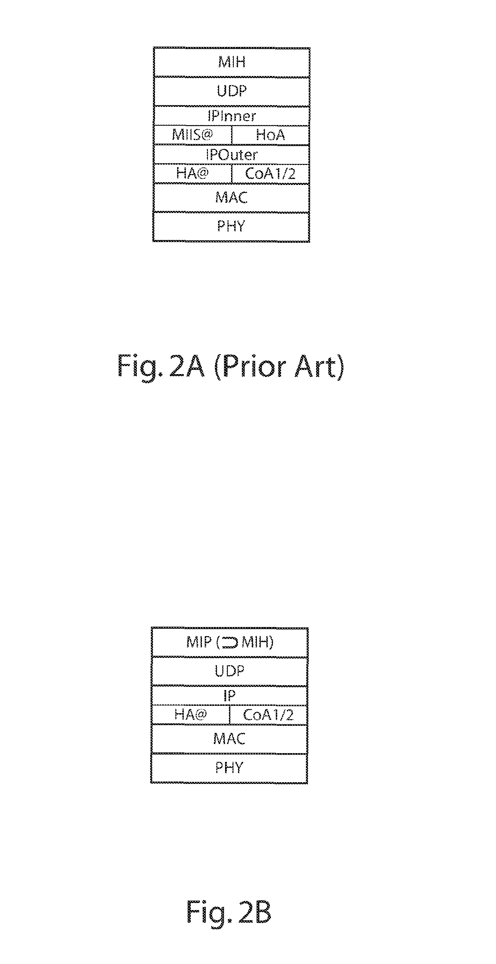

There is seen in fig. 2A the prior art protocol stack that is used at the mobile node UE for MIH communication.

The protocol stack comprises MIH as application layer, User Datagram Protocol (UDP) as transport layer, a first IP layer IPInner as inner routing layer for global IP connectivity towards MIH network entities, a second IP layer IPOuter as outer routing layer for tunneling between the mobile node UE and the home agent HA, a Medium Access Layer (MAC or L2), and a physical layer (PHY or L1).

For a MIH message issued by the mobile node UE while attached to the subnet 21, respectively 31, and bound to e.g. the server MIIS, the inner IP routing layer IPInner comprises the home address HoA of the mobile node UE as source IP address, and a public IP address MIIS@ of the server MIIS as destination IP address. The outer IP layer IPOuter comprises the care-of address CoA1, respectively CoA2, temporarily assigned to the mobile node UE as source IP address, and a public IP address HA@ of the home agent HA as destination IP address. The outer IP layer IPOuter of the upstream datagrams is stripped by the home agent HA before further forwarding towards the server MIIS.

For a MIH message issued by e.g. the server MIIS, and bound to the mobile node UE while attached to the subnet 21, respectively 31, the inner IP routing layer IPInner comprises the public IP address MIIS@ of the server MIIS as source IP address, and the home address HoA as destination IP address. The outer IP layer IPOuter comprises the public IP address HA@ of the home agent HA as source IP address, and the care-of address CoA1, respectively CoA2, as destination IP address. The outer IP layer IPOuter is added to the downstream datagrams by the home agent HA before further forwarding towards the mobile node UE.

It is to be noticed that tunneling may not necessarily apply for upstream communication.

There is seen in fig. 2B the new protocol stack that is used at the mobile node UE for MIH communication.

MIH payload are part of the MIP layer, and are encoded with a specific MIP extension (still to be defined). Then the MIP message is directly encoded over UDP, next IP, and last L2 and L1 layers.

MIP GENERIC NOTIFICATION message and/or MIP GENERIC NOTIFICATION ACK message and/or MIP REGISTRATION REQUEST message and/or MIP REGISTRATION REPLY message can indistinctly be used to convey MIH payload.

For a MIH message issued by the mobile node UE while attached to the subnet 21, respectively 31, and bound to e.g. the server MIIS, the single IP layer comprises the care-of address CoA1, respectively CoA2, of the mobile node UE as source IP address, and the public IP address HA@ of the home agent HA as destination IP address.

The home agent HA is further configured to find out the actual recipient of the MIH message based on the MIH payload (e.g., which type of MIH service is requested) and/or based on geographical/topological location information (e.g., as derived from the care-of address). The home agent HA is further configured to re-encapsulate the MIH payload for further forwarding to the appropriate MIH entities. Typically, the MIH payload is encapsulated over UDP, IP, L2 and L1, and the IP layer comprises the public IP address HA@ of the home agent HA as source IP address, and a public IP address of the MIH entity as destination IP address.

For a MIH message issued by e.g. the server MIIS, and bound to the mobile node UE while attached to the subnet 21, respectively 31, the IP layer comprises the public IP address MIIS@ of the server MIIS as source IP address, and the public IP address HA@ of the home agent HA as destination IP address.

The MIHF identifier and the transaction identifier are used by the home agent HA to match a specific MIH response from a particular MIH entity with a specific care-of address that issued the corresponding MIH request, and to which the MIH response shall be ultimately sent.

Then, the MIH payload is encapsulated into a MIP message as a MIP extension, and the MIP message is delivered to the mobile node UE using the public IP address HA@ of the home agent HA as source IP address, and the care-of address CoA1, respectively CoA2, of the mobile node UE as destination IP address.

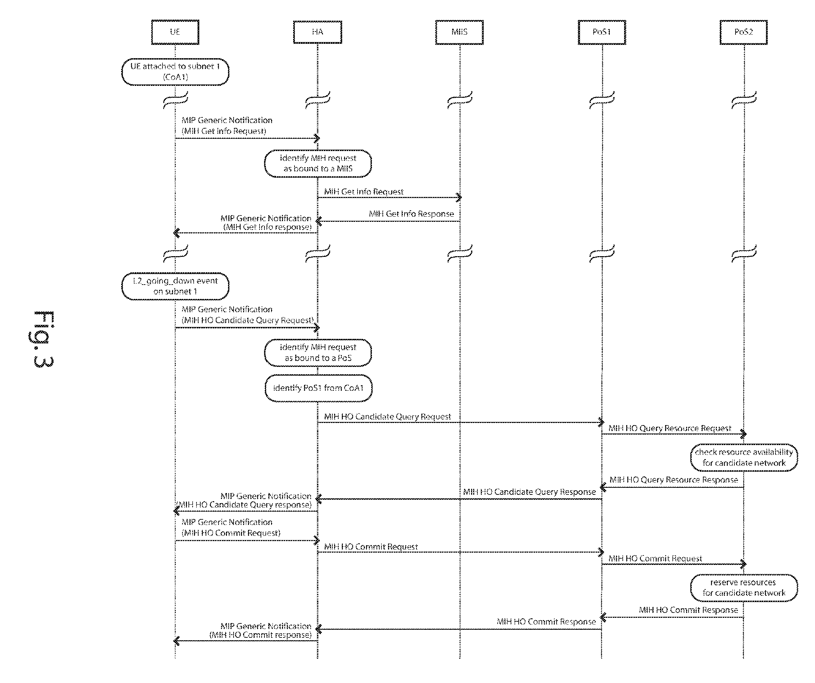

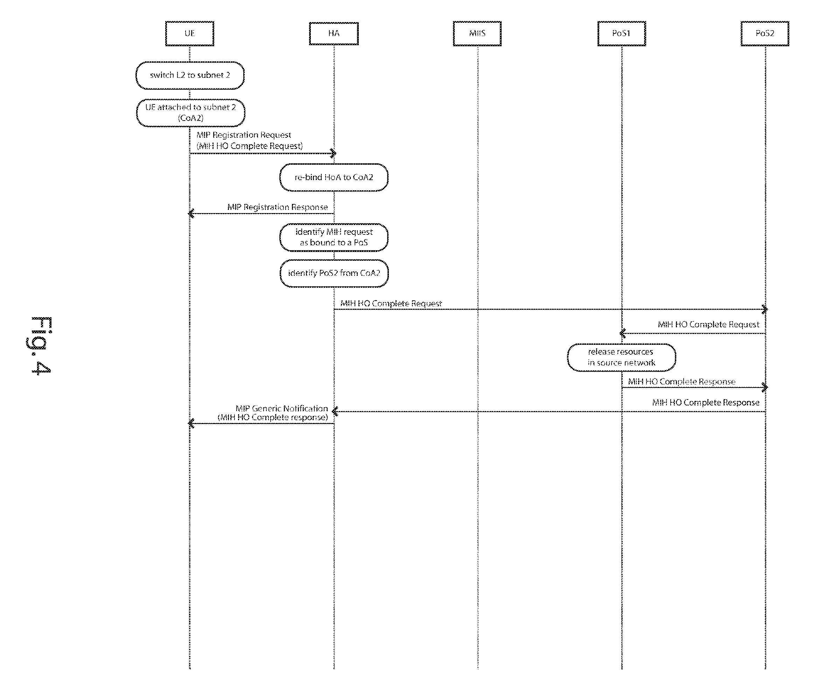

There is seen in fig. 3, and further in fig. 4, MIP and MIH messages exchanged between the mobile node UE, the home agent HA, the serving PoS PoS1, the target PoS PoS2 and the server MIIS during a mobile-initiated handover from the serving subnet 21 to the target subnet 31.

Initially, the mobile node UE is in the neighborhood of the base station 22 and is attached to the subnet 21. The mobile node UE is temporarily assigned a first co-located care-of address CoA1 in the subnet 21. Registration with the home agent HA takes place, and the home address HoA is bound to the care-of address CoA1 in a local data repository of the home agent HA.

After attaching to the visited subnet 21, the mobile node UE queries information about neighboring networks by sending a MIH GET INFORMATION REQUEST message to a MIH information server. To do so, the mobile node UE encapsulates the MIH GET INFORMATION REQUEST message into a MIP GENERIC NOTIFICATION message using a specific MIP extension. The GENERIC NOTIFICATION message is delivered to the home agent HA for further handling. The home agent HA may acknowledge the good receipt of the GENERIC NOTIFICATION message by sending back a GENERIC NOTIFICATION ACK message to the mobile node UE.

The home agent HA next identifies the MIP payload as being a MIH message, and further as being a request for information service typically bound to a MIH information server. The home agent HA identifies the server MIIS as being adapted to handle that request by means of e.g. a directory service, stores the MIHF identifier and transaction identity of the MIH message into a local data repository, and re-encapsulates the MIH message for further forwarding towards the server MIIS.

The server MIIS answers with a MIH GET INFORMATION RESPONSE message comprising the list and characteristics of the neighboring networks, presently the subnet 31.

The home agent HA associates this response to a particular requesting mobile node associated with a particular care-of address, presently the mobile node UE and the care-of address CoA1, and forwards the response back to the so-identified care-of address. The response is either encoded in a MIP GENERIC NOTIFICATION ACK message if the transaction with the server MIIS is expected to complete well before the acknowledgment timeout (e.g., if the server MIIS is integrated together with the home agent HA), or into another MIP GENERIC NOTIFICATION message.

In a further step, the mobile node UE moves away from the base station 22 and gets closer to the base station 32. As a consequence, the mobile node UE is notified about a L2_going_down event for the serving subnet 21, which is the trigger to start preparing a handover towards the target base station 32.

The mobile node UE queries the availability of the resources at the candidate networks by issuing a MIH MN HO CANDIDATE QUERY REQUEST message. The message is encapsulated in MIP GENERIC NOTIFICATION message and delivered to the home agent HA for further handling.

The home agent HA next identifies the MIP payload as being a MIH message, and further as being a candidate resource query typically bound to the current serving PoS. The home agent HA identifies a suitable PoS for handling that request based on the source IP address of the MIP message or any alike parameter indicative of the current geographical/topological location of the mobile node UE. The home agent HA may further query a directory service to find out a suitable PoS. Presently, the home agent HA identifies the PoS PoS1 as suitable for serving this MIH query in the subnet 21, which the care-of address CoA1 belongs to. Next, the home agent HA stores the MIHF identifier and transaction identity of the MIH message into a local data repository, and re-encapsulates the MIH message for further forwarding towards the PoS PoS1.

The PoS PoS1 in turn queries each and every candidate PoS, presently the PoS PoS2, for checking the availability of resources in the candidate network. This is achieved by issuing a MIH N2N HO QUERY RESOURCE REQUEST towards the respective candidate PoSs. The candidate PoS PoS2 answers with a MIH N2N HO QUERY RESOURCE RESPONSE, and the serving PoS PoS1 answers the home agent HA with the resulting resources availability at the candidate networks by sending back a MIH MN HO CANDIDATE QUERY RESPONSE message.

The home agent HA associates this response to a particular requesting mobile node associated with a particular care-of address, presently the mobile node UE and the care-of address CoA1, and forwards the response back to the so-identified care-of address. The response is encoded into another MIP GENERIC NOTIFICATION message.

Thereupon, the mobile node UE decides on the target of the handover, presently the target base station 32, and prepares the handover by issuing a MIH MN HO COMMIT REQUEST message towards the serving PoS PoS1 for reserving and preparing resources at the target side. This MIH message is again encapsulated in a MIP GENERIC NOTIFICATION message for transmission towards the home agent HA, and is relayed by the home agent HA, and further by the serving PoS PoS1, towards the candidate PoS PoS2 as a MIH N2N HO COMMIT REQUEST message. The target PoS PoS2 responds with the result of the resource preparation by sending back a MIH N2N HO COMMIT RESPONSE message to the serving PoS PoS1, which message being relayed by the serving PoS PoS1 as a MIH MN HO COMMIT RESPONSE message towards the home agent HA, and further towards the mobile node UE after MIP encapsulation.

The mobile management application at the mobile node UE commits a L2 link switch to the target network 31 by invoking the appropriate MIH command service. The mobile node UE obtains a new care-of address CoA2 in that subnet, which needs to be registered at the home agent HA. Also, the mobile node UE needs to inform the target PoS PoS2 and the source PoS PoS1 about the successful completion of the handover procedure so as the resources at the source side can be released. Hence, the mobile node UE piggybacks the MIH MN HO COMPLETE REQUEST payload to the MIP REGISTRATION REQUEST message which is to be send anyhow to the home agent HA.

Upon receipt of the REGISTRATION REQUEST message, the home agent HA binds the home address HoA of the mobile node UE to the new care-of address CoA2, and released the previous HoA-CoA1 binding. Next, the home agent HA extracts the MIH payload from the MIP REGISTRATION REQUEST message, and identifies it as a handover completion indication to be sent to the new serving PoS (former target PoS), presently the PoS PoS2. This message is relayed by the PoS Pos2 towards the source PoS PoS1 as a MIH N2N HO COMPLETE REQUEST message. The resources previously allocated to the mobile node UE are released in the source subnet 21, and the PoS PoS1 answers with a MIH N2N HO COMPLETE RESPONSE message to the PoS PoS2, which message being relayed as a MIH MN HO COMPLETE RESPONSE message towards the home agent HA, and further towards the mobile node UE after MIP encapsulation. The response is either encoded in a MIP REGISTRATION RESPONSE message if the MIH transaction with the source and target PoS is expected to complete well before the response timeout, or into another MIP GENERIC NOTIFICATION message.

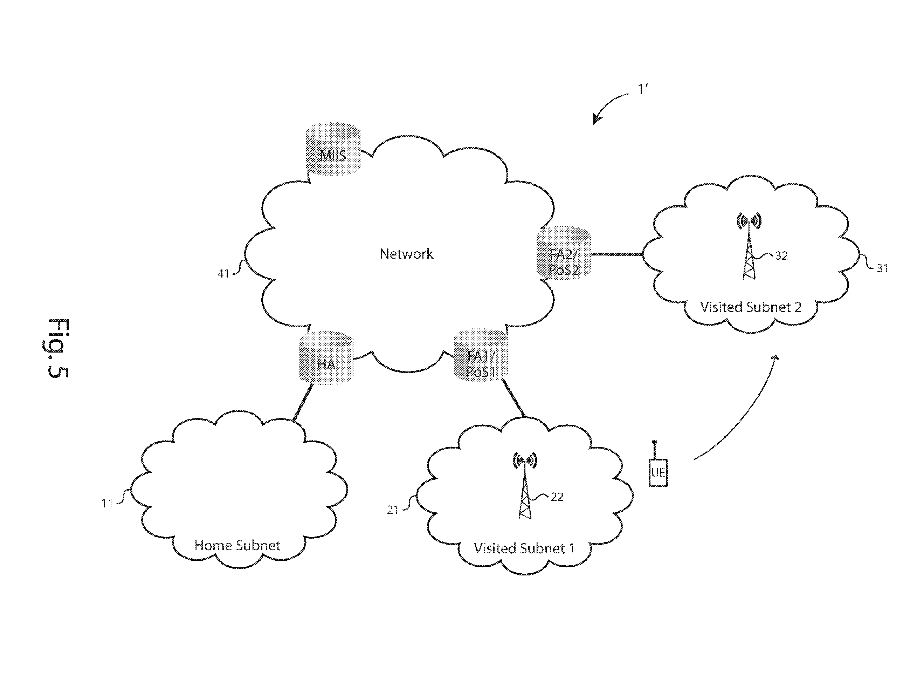

There is seen in fig. 5 a second communication system 1' wherein the PoSs PoS1 and PoS2 have been integrated together with MIP foreign agents FA1 and FA2 respectively. This embodiment is particularly suited if MIP communication between the mobile node UE and the home agent HA necessarily takes place via a foreign agent. This is the case if a foreign agent care-of address is used, or if a co-located care-of address is used and registration shall take place via the foreign agent. This embodiment is advantageous as it reduces the latency of MIH transactions between the mobile node UE and the serving and target PoSs.

Again, the operation of the server MIIS may also be proxied by the home agent HA so as to reduce the latency of MIH transactions between the mobile node UE and the server MIIS.

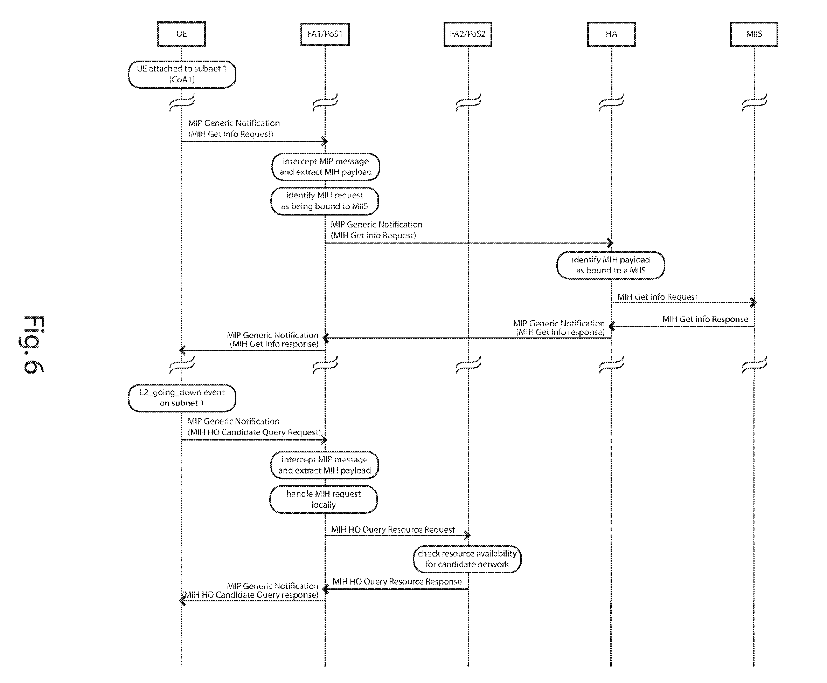

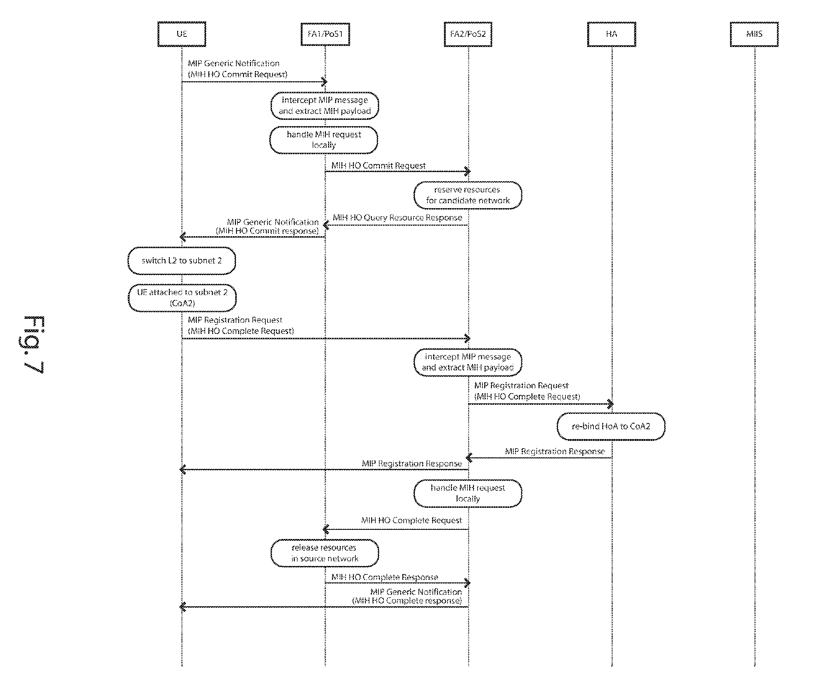

There is seen in fig. 6, and further in fig. 7, MIP and MIH messages exchanged between the mobile node UE, the home agent HA, the serving PoS1/FA1, the target PoS2/FA2 and the server MIIS during a mobile-initiated handover from the serving subnet 21 to the target subnet 31.

After attaching to the visited subnet 21, the mobile node UE queries information about neighboring networks by sending a MIH GET INFORMATION REQUEST message to a MIH information server. To do so, the mobile node UE encapsulates the MIH GET INFORMATION REQUEST message into a MIP GENERIC NOTIFICATION message using a specific MIP extension. The GENERIC NOTIFICATION message is delivered to the foreign agent FA1 for further handling. The foreign agent FA1 may acknowledge the good receipt of the GENERIC NOTIFICATION message by sending back a GENERIC NOTIFICATION ACK message to the mobile node UE.

The foreign agent FA1 next identifies the MIP payload as being a MIH message, and further as being a request for information service typically bound to a MIH information server. The foreign agent FA1 cannot handle that request, and thus relays the GENERIC NOTIFICATION message to the home agent HA for further handling.

The home agent HA identifies the server MIIS as being adapted to handle that request by means of e.g. a directory service, stores the MIHF identifier and transaction identity of the MIH message into a local data repository, and re-encapsulates the MIH message for further forwarding towards the server MIIS.

The server MIIS answers with a MIH GET INFORMATION RESPONSE message comprising the list and characteristics of the neighboring networks, presently the subnet 31.

The home agent HA associates this response to a particular requesting mobile node associated with a particular care-of address, presently the mobile node UE and the care-of address CoA1, and forwards the response back to the so-identified care-of address. The response is either encoded in a MIP GENERIC NOTIFICATION ACK message if the transaction with the server MIIS is expected to complete well before the acknowledgment timeout (e.g., if the server MIIS is integrated together with the home agent HA), or into another MIP GENERIC NOTIFICATION message. The MIP message conveying the MIH response is then relayed by the foreign agent FA1 towards the mobile node UE.

In a further step, the mobile node UE moves away from the base station 22 and gets closer to the base station 32. As a consequence, the mobile node UE is notified about a L2_going_down event for the serving subnet 21, which is the trigger to start preparing a handover towards the base station 32.

The mobile node UE queries the availability of the resources at the candidate networks by issuing a MIH MN HO CANDIDATE QUERY REQUEST message. The message is encapsulated in MIP GENERIC NOTIFICATION message for delivery to the foreign agent FA1.

The foreign agent FA1 next identifies the MIP payload as being a MIH message, and further as being a candidate resource query to be handled locally by the co-located serving PoS PoS1. Next, the PoS PoS1 stores the MIHF identifier and transaction identity of the MIH message into a local data repository, and queries each and every candidate PoS, presently the PoS PoS2, for checking the availability of resources in the candidate network. This is achieved by issuing a MIH N2N HO QUERY RESOURCE REQUEST towards the respective candidate PoSs. The candidate PoS PoS2 answers with a MIH N2N HO QUERY RESOURCE RESPONSE, and the serving PoS PoS1 answers the mobile node UE with the resulting resources availability at the candidate networks by sending back a MIH MN HO CANDIDATE QUERY RESPONSE message encapsulated into another MIP GENERIC NOTIFICATION message

The handover procedure keeps on with resource reservation and preparation at the target side, and with similar MIH message forwarding and handling.

When the mobile node UE eventually notifies the handover completion to the target network, it piggybacks the MIH MN HO COMPLETE REQUEST payload to the MIP REGISTRATION REQUEST message which is to be send anyhow to the home agent HA via the foreign agent FA2.

Upon receipt of the REGISTRATION REQUEST message, the foreign agent FA2 extracts the MIH payload from the MIP REGISTRATION REQUEST message, and identifies it as a handover completion indication to be handled locally by the co-located PoS PoS2. The foreign agent FA2 thus stripes the MIH extension before further forwarding the REGISTRATION REQUEST message to the home agent HA for address binding, and passes the MIH payload to the PoS PoS2.

The MIH response is either encoded in the MIP REGISTRATION RESPONSE message received from the home agent HA if the MIH transaction with the source PoS PoS1 is expected to complete well before the response timeout, or into another MIP GENERIC NOTIFICATION message.

As one can see, the number of MIH and MIP messages exchanged in the second embodiment is greatly reduced compared to the first embodiment, thereby saving considerable network resources and bandwidth.

Although the description has made exhaustive references to Mobile IP and IEEE 802.21 protocols, the present invention is not restricted thereto and may similarly apply to alike mobility support protocols, such as Mobile IPv6 (RFC 3775), and alike mobility management protocols.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

## Claims

1. **A communication system** (1, 1') comprising:
- **a roaming mobile node** (UE) configured to select **a particular access network** (21, 31) based on **handover data** exchanged with **a handover service node** (MIIS, PoS1, PoS2), and to attach to said particular access network, thereby yielding **a particular network location** for said mobile node,
- **a home agent** (HA) configured to provide mobility support to said mobile node, and further configured to keep track of said particular network location for said mobile node, and to tunnel traffic bound to **a home network address** (HoA) held by said mobile node in **a home subnet** (11) towards said particular network location,
*wherein* said mobile node is further configured to encode, respectively decode, said handover data into, respectively from, **mobility messages** exchanged with said home agent and/or with a **foreign agent** (FA1, FA2) that provides local mobility support to said mobile node at said particular network location.

2. **A communication system** according to claim 1, *wherein* said handover data comprises handover event service data whereby handover events are notified.

3. **A communication system** according to claim 1, *wherein* said handover data comprises handover command service data whereby handover commands are carried out.

4. **A communication system** according to claim 1, *wherein* said handover data comprises handover information service data whereby knowledge about neighboring access networks are gained.

5. **A communication system** according to claim 1, *wherein* said mobility messages are generic notification messages exchanged with said home agent or said foreign agent.

6. **A communication system** according to claim 1, *wherein* said mobility messages are registration messages exchanged with said home agent or said foreign agent.

7. **A communication system** according to claim 1, *wherein* said home agent and said handover service node form part of a single network node.

8. **A communication system** according to claim 1, *wherein* said foreign agent and said handover service node form part of a single network node.

9. **A mobile node** (UE) configured to select **a particular access network** (21, 31) based on **handover data** exchanged with a **handover service node** (MIIS, PoS1, PoS2), and to attach to said particular access network, thereby yielding **a particular network location** for said mobile node,
*wherein* said mobile node is further configured to encode, respectively decode, said handover data into, respectively from, **mobility messages** exchanged with **a home agent** (HA) that provides mobility support to said mobile node by keeping track of said particular network location for said mobile node and by tunneling traffic bound to **a home network address** (HoA) held by said mobile node in **a home subnet** (11) towards said particular network location, and/or with a **foreign agent** (FA1, FA2) that provides local mobility support to said mobile node at said particular network location.

10. **A method** for managing mobility of **a roaming mobile node** (UE), and comprising the steps of:
- by said mobile node, selecting **a particular access network** (21, 31) based on **handover data** exchanged with **a handover service node** (MIIS, PoS1, PoS2), and attaching to said particular access network, thereby yielding a particular network location for said mobile node,
- by a home agent configured to provide mobility support to said mobile node, keeping track of said particular network location for said mobile node, and tunneling traffic bound to a home network address (HoA) held by said mobile node in a home subnet (11) towards said particular network location,
*wherein* said method further comprises the steps of, by said mobile node, encoding, respectively decoding, said handover data into, respectively from, mobility messages exchanged with said home agent and/or with a foreign agent (FA1, FA2) that provides local mobility support to said mobile node at said particular network location.
